# EUROPÄISCHE PATENTSCHRIFT

(11) **EP 3 755 491 B1**
(45) Veröffentlichungstag und Bekanntmachung des Hinweises auf die Patenterteilung: **13.08.2025**
(21) Anmeldenummer: 19703980.3
(22) Anmeldetag: 05.02.2019
(51) Int. Cl.: B23K 26/06, B23K 26/14, B23K 26/16, B23K 26/34

(54) **LASERBEARBEITUNGSKOPF ZUM LASER-DRAHT-AUFTRAGSCHWEISSEN**
LASER PROCESSING HEAD FOR LASER METAL DEPOSITION USING A WIRE
TETE DE TRAITEMENT AU LASER POUR LE DEPOT DE METAL AU LASER UTILISANT UN FIL

(30) Priorität: 23.02.2018 DE 102018202797
(43) Veröffentlichungstag der Anmeldung: 30.12.2020
(73) Patentinhaber: Fraunhofer-Gesellschaft zur Förderung der angewandten Forschung e.V., 80686 München (DE)
(72) Erfinder: KUBISCH, Frank, 04552 Borna (DE); THIEME, Sebastian, 01458 Ottendorf-Okrilla (DE); HILLIG, Holger, 01816 Bad Gottleuba (DE); SCHÜLER, Sebastian, 12051 Berlin (DE)
(74) Vertreter: Pfenning, Meinig & Partner mbB
(86) Internationale Anmeldenummer: PCT/EP2019/052744
(87) Internationale Veröffentlichungsnummer: WO 2019/162079

(56) Entgegenhaltungen:
- CN-A- 106 312 304
- CN-A- 107 227 455
- CN-U- 202 367 348
- JP-A- 2001 314 985

## Beschreibung

Die Erfindung betrifft einen Laserbearbeitungskopf, der zum Laser-Draht-Auftragsschweißen ausgebildet ist. Mit dem Laserbearbeitungskopf können unterschiedliche drahtförmige Werkstoffe, insbesondere Drähte mit Außendurchmessern kleiner 1,6 mm, bevorzugt kleiner 1 mm und in der Regel kleiner 0,6 mm verarbeitet werden. Es können damit Beschichtungen oder dreidimensionale Konturen auf Werkstückoberflächen, wie auch eine additive Fertigung dreidimensionaler Werkstücke oder Bauteile realisiert werden.

Solche Laserbearbeitungsköpfe sind bekannt. Dabei ist es häufig ein Ziel eine zentrale Drahtzuführung und das Aufschmelzen mit der Energie eines Laserstrahls in möglichst homogener Form zu erreichen. Dazu muss Laserstrahlung radial von außen auf einen zentrisch positionierten und geförderten drahtförmigen Werkstoff gerichtet werden, um diesen möglichst homogen aufzuschmelzen.

Dazu wird ein Laserstrahl auf strahlumlenkende reflektierende Elemente gerichtet, so dass ein reflektierter Einzelstrahl oder mehrere reflektierte Teilstrahlen in Richtung einer Ebene reflektiert werden, in der sich ein Schnittpunkt der reflektierten Laserstrahlung ergibt. In diese Ebene sollte der drahtförmige Werkstoff gefördert und dort aufgeschmolzen werden. Diese Ebene ist oberhalb der Oberfläche eines Werkstücks angeordnet auf der Werkstoff durch das Laser-Draht-Auftragsschweißen aufgebracht werden soll.

Der Laserstrahl wird üblicherweise von einer Laserstrahlungsquelle emittiert und über eine optische Faser in eine Optikeinheit eingeführt. Dort trifft er auf den Laserstrahl, wie oben beschrieben reflektierende Elemente und wird dann durch mehrere Teilstrahlen in die Ebene mit dem Schnittpunkt reflektiert. Der drahtförmige Werkstoff soll dabei zentrisch in Bezug zu den in einem gemeinsamen Schnittpunkt auftreffenden Teilstrahlen zugeführt werden, um eine homogene Erwärmung und eine optimale Werkstoffausnutzung zu sichern.

Dies wird bisher so realisiert, dass die Ausrichtung des Laserstrahls und dabei insbesondere die der optischen Faser in Bezug zu den reflektierenden Elementen justiert wird.

Dabei ergibt sich ein erheblicher Aufwand, da an mehreren voneinander getrennten Positionen und Elementen eines Laserbearbeitungskopfes eine Optik-Justierung durchgeführt werden muss. Insbesondere die Ausrichtung des Laserstrahls und insbesondere einer optischen Faser ist problematisch und störanfällig während des Betriebes oder einer neuen Inbetriebnahme.

So sind in CN 107 322 166 A, CN 107 414 305 A, CN 106 583 726 A und CN 106 392 314 A Laserbearbeitungsköpfe zum Auftragsschweißen bekannt, bei denen Teilstrahlen eines Laserstrahls mit reflektierenden Elementen zum Auftragsschweißen genutzt werden.

CN 202 367 348 U offenbart die Basis für den Oberbegriff des Anspruchs 1 und unterscheidet sich von diesen bekannten technischen Lösungen dadurch, dass ein ringförmiger Spiegel eingesetzt wird.

Aus DE 10 2009 038 659 A1 ist eine obere Emissionsabsaugung für Laserbearbeitungssysteme bekannt gewesen.

Aus CN 107 227 455 A geht ein Laserbearbeitungskopf zum Auftragsschweißen hervor.

JP 2001 314985 A betrifft das Laserstrahlschweißen.

In CN 106 312 304 A ist ein Laserbearbeitungskopf zum Drahtauftragsschweißen beschrieben, bei dem ein Laserstrahl in Teilstrahlen geteilt wird.

Es ist daher Aufgabe der Erfindung, Möglichkeiten für eine vereinfachte und sichere Optik-Justage eines Laserstrahls in Bezug zu zugeführtem drahtförmigem Werkstoff auch bei einem dauerhaften Betrieb anzugeben.

Erfindungsgemäß wird diese Aufgabe mit einem Laserbearbeitungskopf der die Merkmale des Anspruchs 1 aufweist, gelöst. Weiterbildungen und Ausführungsformen der Erfindung können mit in untergeordneten Ansprüchen bezeichneten Merkmalen realisiert werden.

Bei dem erfindungsgemäßen Laserbearbeitungskopf ist durch eine Optikeinheit (4) ein Laserstrahl (6) auf ein pyramidenförmiges Element (8) und dabei auf mindestens drei mit in gleichen Winkelabständen zueinander ausgerichtete reflektierende Flächen des pyramidenförmigen Elements (8.1) gerichtet. Die jeweils von den reflektierenden Flächen (8.1) reflektierten Teilstrahlen (6.1, 6.2, 6.3) treffen auf radial außen an einem Trägerelement angeordnete reflektierende Oberflächen (8.2) auf. Dabei sind die reflektierenden Oberflächen (8.1, 8.2) so ausgerichtet, dass die an ihnen reflektierten Teilstrahlen (6.1, 6.2, 6.3) so ausgerichtet sind, dass sie sich in einer gemeinsamen Ebene (6.4) schneiden.

Im Gehäuse (1) ist eine interne Drahtzuführung (2), mit einer in Richtung eines zu bearbeitenden Werkstücks angeordneten Austrittsdüse (2.1) für einen drahtförmigen Werkstoff (3), der mit der Energie der auf den drahtförmigen Werkstoff (3) auftreffenden Teilstrahlen (6.1, 6.2, 6.3) aufschmelzbar ist, angeordnet. Dabei ist die Austrittsdüse (2.1) in Vorschubbewegung des drahtförmigen Werkstoffs (3) vor der Ebene in der sich die reflektierten Teilstrahlen schneiden (6.4) angeordnet.

Das pyramidenförmige Element (8) und die reflektierenden Oberflächen (8.1, 8.2) sind an einem einzigen Optik-Trägerelement (5.1) ausgebildet. Das Optik-Trägerelement (5.1) ist in der Optik-Justierung (5) so angeordnet und fixierbar, dass es in zwei senkrecht zur optischen Achse des Laserstrahls (6) oder senkrecht zur mittleren Längsachse des drahtförmigen Werkstoffs (3) im Anschluss an die Austrittsdüse (2.1) für eine Justierung verschiebbar ist.

Das Optik-Trägerelement (5.1) kann so in senkrecht zueinander ausgerichteten Achsen (x- und y-Achse eines kartesischen Koordinatensystems) für eine Optik-Justierung (5) der Teilstrahlen (6.1, 6.2, 6.3) verschoben und in der gewünschten Position arretiert werden.

Dadurch reduziert sich die wesentliche Justage des optischen Systems auf die Optik-Justage (5) eines einzigen, nämlich des Optik-Trägerelements (5.1).

Das pyramidenförmige Element (8) sollte auf dem Optik-Trägerelement (5.1) so angeordnet sein, dass seine Spitze im Zentrum zwischen den reflektierenden Oberflächen (8.1) angeordnet ist. Dadurch kann bei exakter Justage des Optik-Trägerelements (5.1) gesichert werden, dass die von den reflektierenden Oberflächen des pyramidenförmigen Elements (8.1) reflektierten Teilstrahlen (6.1, 6.2, 6.3) die gleiche Energie mit gleichen Strahlquerschnittsflächen der Teilstrahlen aufweisen.

Das Optik-Trägerelement (5.1) ist ein Monolyth, der aus einem einzigen Werkstoff gebildet ist, an dem kein am Optik-Trägerelement (5.1) vorhandenes Einzelteil infolge einer Montage am Optik-Trägerelement (5.1) befestigt worden ist. Ein Optik-Trägerelement (5.1) ist einstückig aus einem Halbzeug und kann durch eine spanende Bearbeitung und/oder ein additives Herstellungsverfahren hergestellt worden.

Bevorzugt sollte ein Optik-Trägerelement (5.1) aus Kupfer oder einer Kupferlegierung hergestellt werden.

Am oder im Optik-Trägerelement (5.1) sind mindestens ein Kühlkanal (8.4) sowie Kühlnuten (8.5) ausgebildet, die an eine Zu- und Abführung für ein Kühlmedium anschließbar ist. Dadurch kann auch ein Verzug bei unterschiedlichen Betriebstemperaturen weitestgehend kompensiert werden. Auch der mindestens eine Kühlkanal (8.4) kann unmittelbar am oder im Optik-Trägerelement (5.1) ausgebildet und ggf. mit einer Dichtung gegenüber der Umgebung abgedichtet sein. Eine Dichtung kann zwischen dem offenen Kühlkanal (8.4) oder Öffnungen am Kühlkanal (8.5) und der Montageeinheit (14), dem Schutzglasmodul (16) und dem Gehäuse(1) angeordnet sein.

Das Optik-Trägerelement (5.1) kann mittels zwei senkrecht zueinander mit einem Gewinde versehenen Justierlelementen (5.2) in den zwei senkrecht zueinander ausgerichteten Achsen justierbar sein. Diese Justierelemente (5.2) können im einfachsten Fall manuell verstellt werden. Es kann aber auch ein motorischer Antrieb für die translatorische Bewegung des Optik-Trägerelements (5.1) in der Ebene eingesetzt werden. Je nach Steigung des Gewindes kann die Genauigkeit bei der Optik-Justierung (5) erhöht werden. So führen Gewinde mit sehr kleiner Steigung zu einer hohen Positionier- und Justiergenauigkeit. Solche Gewinde haben auch eine hohe Selbsthemmung, so dass auf eine zusätzliche Arretiermöglichkeit verzichtet werden kann. Des Weiteren sind die Justierelemente (5.2) gegeneinander in der jeweiligen XY Achse fest arretierbar. Es sind Gewindesteigungen von 0,2 bevorzugt werden.

Mehrere externe Drahtzuführungen (10, 11, 12, 13) können bevorzugt für eine Zufuhr unterschiedlicher Drahtwerkstoffe (3) vorhanden und außerhalb des Gehäuses (1) angeordnet sein. Aus den externen Drahtzuführungen (10, 11, 12, 13) kann jeweils ein drahtförmiger Werkstoff (3) der internen Drahtzuführung (2) zugeführt werden, wobei an der der Austrittsdüse (2.1) gegenüberliegenden Stirnseite eine trichterförmige Eintrittsöffnung (2.2) für die Einführung eines drahtförmigen Werkstoffs (3) aus einer der externen Drahtzuführungen (10, 11, 12, 13) in die interne Drahtzuführung (2) ausgebildet sein sollte.

Externe Drahtzuführungen (10, 11, 12, 13) können mit einem motorischen Antrieb versehen sein, der die Vorschubbewegung des jeweiligen drahtförmigen Werkstoffs (3) realisieren kann. Vorteilhaft kann an den externen Drahtzuführungen (10, 11, 12, 13) auch eine Einrichtung zur Vermeidung einer Verdrillung des von einer Rolle zugeführten drahtförmigen Werkstoffs (3) vorhanden sein.

Drahtförmiger Werkstoff (3) kann von einer externen Drahtzuführung (10, 11, 12, 13) in den trichterförmigen Bereich (2.2) der internen Drahtzuführung (2) und von dort durch die interne Drahtzuführung (2) hindurch bis zur Austrittsdüse (2.1) in den Bereich, in dem sich die Teilstrahlen schneiden (6.4), gefördert werden. Dabei erfolgt die Förderung innerhalb des Gehäuses (1) so, dass zwischen externer Drahtzuführung (10, 11, 12, 13) und Austrittsdüse (2.1) keine nachteilige Beeinflussung des drahtförmigen Werkstoffes (3) durch Laserstrahlung (6) möglich ist. Dies kann durch eine Positionierung (5) des drahtförmigen Werkstoffs (3) innerhalb des Gehäuses erreicht werden, bei der die Teilstrahlen (6.1, 6.2, 6.3) durch Bereiche (14.2) geführt werden, in denen kein drahtförmiger Werkstoff (3) mit den Teilstrahlen (6.1, 6.2, 6.3) in Kontakt treten kann.

Vorteilhaft kann am Gehäuse (1) an der einem Werkstück zugewandten Stirnseite eine Rauchgasabsaugung (9) vorhanden sein. Die Rauchgasabsaugung (9) kann mit einem Kegel (9.7) gebildet sein, die am Gehäuse (1) angeschraubt werden kann. In Richtung Werkstück sollte an einem solchen Kegel (9.7) eine Öffnung vorhanden sein, durch die die reflektierten Teilstrahlen (6.1, 6.2, 6.3) und ein drahtförmiger Werkstoff (3) austreten können. Durch diese Öffnung sollte auch ein Schutzgas auf den zu bearbeitenden Werkstückbereich gerichtet werden.

Die Rauchgasabsaugung (9), insbesondere ein Kegel sollte mit mehreren über den äußeren Umfang angeordneten Durchbrechungen (9.2), die in einem gemeinsamen Absaugkanal (9.1) münden, gebildet sein. Dabei sollte die Summe der freien Querschnittsflächen der Durchbrechungen (9.2), durch die Rauchgas aus dem Bearbeitungsbereich des jeweiligen Werkstücks abgesaugt wird, der freien Querschnittsfläche des gemeinsamen Absaugkanals (9.1) entsprechen. Es kann aber auch die Summe der freien Querschnittsflächen der Durchbrechungen (9.2) maximal 10 % größer oder kleiner als die freie Querschnittsfläche des Absaugkanals (9.1) sein, um eine ausreichende wirksame Absaugung von Rauchgas aus dem Bearbeitungsbereich zu gewährleisten.

Das am Gehäuse (1) befestigbare düsenförmige Element (9.7) der Rauchgasabsaugung (9) kann mit mindestens einem Kühlkanal (9.3), der an eine Zu- und eine Abführung (9.4, 9.5) für ein Kühlmedium verbindbar ist, ausgebildet sein. In diesem Fall kann die Zu- und Abführung (9.4, 9.5) durch den Absaugkanal (9.1) hindurch nach oder von außerhalb der Montageeinheit (14) und des Gehäuses (1) geführt sein. Dabei sollte die dafür erforderliche Querschnittsfläche im Inneren des Absaugkanals (9.1) die Bedingungen des Anspruchs 8 berücksichtigen, also die Summe der freien Querschnittsflächen der Durchbrechungen (9.2) der freien Querschnittsfläche des Absaugkanals (9.1) unter Berücksichtigung des Verlust an freier Querschnittsfläche, der durch die Zu- und Abführung (9.4, 9.5) für ein Kühlmedium in den mindestens einen Kühlkanal (9.3) an der Rauchgasabsaugung (9) entsprechend berücksichtigen.

Die interne Drahtzuführung (2) und insbesondere die Austrittsdüse (2.1) sollte auch senkrecht zur Ebene, in der das Optik-Trägerelement (5.1) zweidimensional verschieb- und justierbar ist, für eine definierte Positionierung (15) in Bezug zur Ebene in der sich die reflektierten Teilstrahlen schneiden (6.4) verschieb- und arretierbar sein. Dadurch kann eine genaue Positionierung (15) in Z-Achsrichtung des drahtförmigen Werkstoffs (3), der in den Einflussbereich der sich schneidenden reflektierten Teilstrahlen (6.1, 6.2, 6.3) gelangt, erreicht werden. Dies kann beispielsweise mit einer Nut-Passfeder-Lösung (2.3) erreicht werden. Dadurch kann die interne Drahtzuführung (2) in Z-Achsrichtung durch translatorische Verschiebung positioniert und ggf. falls erforderlich in einer gewünschten Position mittels einer Arretierung, beispielsweise einer Schraube fixiert werden.

Nachfolgend soll die Erfindung beispielhaft näher erläutert werden.

Dabei zeigen:
- Figur 1: eine perspektivische und eine Explosionsdarstellung eines Beispiels eines erfindungsgemäßen Laserbearbeitungskopfes;
- Figuren 2a, 2b: zwei Darstellungen eines bei der Erfindung einsetzbaren
- Figuren 3a - 3c: Optik-Trägerelements (5.1); drei Darstellungen einer Rauchabgasabführung (9) an einem Laserbearbeitungskopf;
- Figuren 4a, 4b: zwei Darstellungen mit denen die Strahlführung des Laserstrahls (6), der mit ihm gebildeten drei Teilstrahlen (6.1, 6.2, 6.3) und die Zuführung von drahtförmigem Werkstoff (3) beispielhaft erkennbar werden sollte und
- Figuren 5a, 5b: zwei Ansichten für eine Ausgestaltungsmöglichkeit bei der mit mehreren externen Drahtzuführungen (10, 11, 12, 13) drahtförmiger Werkstoff (3) einer internen Drahtzuführung (2) zuführbar ist.

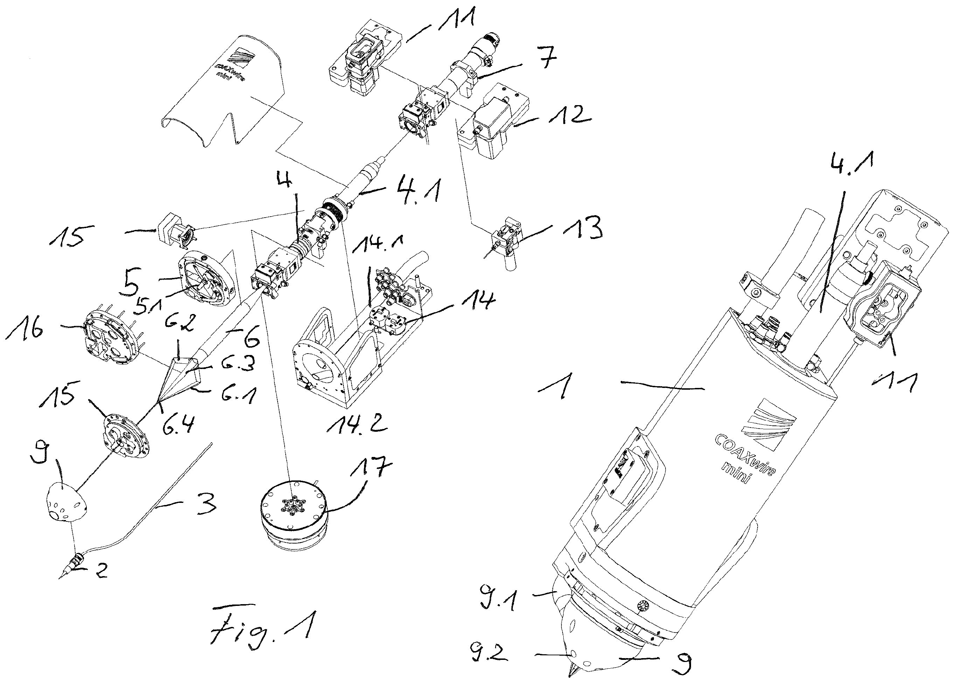

In Figur 1 ist ein Beispiel eines erfindungsgemäßen Laserbearbeitungskopfes gezeigt. Dabei sind in einem Gehäuse (1) eine interne Drahtzuführung (2) für die Zuführung von drahtförmigem Werkstoff (3), optische Komponenten (4) für eine Formung eines Laserstrahls (6), ein Optik-Trägerelement (5.1) für eine Umlenkung des Laserstrahls (6) und Aufteilung des Laserstrahls in drei Teilstrahlen (6.1 - 6.3) angeordnet.

Am Gehäuse (1) ist eine Optikeinheit (4) für eine optische Faser (4.1), durch die der Laserstrahl (6) auf reflektierende Flächen (8.1) eines pyramidenförmigen Elements (8) und reflektierende Oberflächen (8.2), die an einem Optik-Trägerelement (5.1) ausgebildet sind, gerichtet ist, befestigt.

An der gegenüberliegenden Stirnseite des Laserbearbeitungskopfes ist eine Rauchgasabsaugung (9) mit einem aufschraubbaren Kegel (9.7) mit einer Öffnung, durch die der drahtförmige Werkstoff (3) in den Einflussbereich der sich in einer Ebene (6.4) schneidenden Teilstrahlen (6.1 - 6.3) zugeführt werden kann, in Richtung eines nicht dargestellten Werkstücks vorhanden. An dem Kegel (9.7) ist ein Absaugkanal (9.1) vorhanden, der an eine nichtdargestellte einen Unterdruck erreichende Einheit saugseitig angeschlossen ist. Das durch den Absaugkanal (9.1) abgesaugte Rauchabgas kann zu einer ebenfalls nicht dargestellten Filtereinheit geführt werden.

Im Gehäuse (1) ist zwischen dem Optik-Trägerelement (5.1) und der Rauchgasabsaugung (9) ein Schutzglasmodul (16) mit mindestens einem, bei diesem Beispiel drei Schutzgläsern, durch die die drei Teilstrahlen (6.1 - 6.3) in Richtung auf die Ebene in der sie sich schneiden (6.4), hindurch strahlen und mit den Schutzgläsern die anderen im Gehäuse (1) enthaltenen, insbesondere die optischen Komponenten (4) und das Optik-Trägerelement (5.1) vor Verunreinigung geschützt werden können. Das Schutzglasmodul (16) und/oder die Schutzgläser sollten austauschbar sein.

Desweiteren sind an dem Laserbearbeitungskopf noch eine XYZ-Drahtjustage (15) zum Justieren des drahtförmigen Werkstoffs (3) zum Schnittpunkt der drei Teilstrahlen (6.4) sowie eine Montageeinheit (14) vorhanden. Es können verschiedene externe Drahtantriebe (10, 11, 12, 13), andere Optikeinheiten anderer Laserhersteller (7) sowie eine Kollisions- und Sicherheitsabschaltung (17) weiterhin montiert werden.

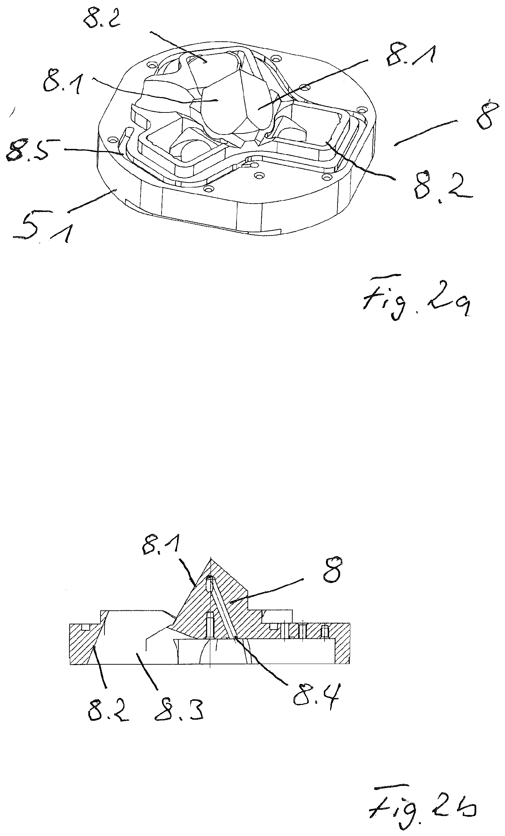

In Figur 2a ist eine perspektivische Darstellung eines Optik-Trägerelements (5.1) gezeigt. Das Optik-Trägerelement (5.1) ist so ausgebildet, dass im Mittelpunkt die Spitze eines pyramidenförmigen Elements (8) angeordnet ist. Auf die Spitze und die drei sich anschließenden und in einem Winkel geneigten reflektierenden Flächen (8.1) trifft der mit den optischen Komponenten fokussierte Laserstrahl (6) auf. Die drei reflektierenden Flächen (8.1) des pyramidenförmigen Elements (8) sind so zueinander ausgerichtet und angeordnet, dass der auftreffende Laserstrahl (6) in drei Teilstrahlen (6.1 -6.3) aufgeteilt und jeder Teilstrahl (6.1 -6.3) auf eine am Optik-Trägerelement (5.1) ausgebildete reflektierende Oberfläche (8.2) auftrifft. Die reflektierenden Oberflächen (8.2) sind so ausgerichtet, dass die Teilstrahlen (6.1 - 6.3) jeweils durch eine Öffnung (8.3) im Optik-Trägerelement (5.1) in einem schräg aufeinander zu gerichteten Winkel in Richtung eines zu bearbeitenden Werkstücks reflektiert werden. Die Reflexionen erfolgen dabei so, dass sich die Teilstrahlen (6.1 - 6.3) in einer Ebene, die oberhalb der an einem Werkstück zu bearbeitenden Oberfläche angeordnet ist, schneiden und dort auch drahtförmiger Werkstoff (3) aus der Austrittsdüse (2.1) zugeführt wird. In Figur 2b ist außerdem erkennbar, dass im Optik-Trägerelement (5.1) ein Kühlkanal (8.4) sowie Kühlnuten (8.5) ausgebildet sind, durch die ein Kühlmedium, insbesondere Kühlwasser zur Kühlung hindurchgeführt werden kann.

Dabei ist die Öffnung in der Rauchgasabsaugung (9) so groß gewählt, dass neben der Austrittsdüse (2.1) der internen Drahtzuführung (2) auch die Teilstrahlen (6.1 - 6.3) problemlos diese Öffnung passieren können.

Das Optik-Trägerelement (5.1) ist aus Kupfer oder einer Kupferlegierung gebildet und als ein Stück durch spanende Bearbeitung hergestellt worden.

Das Optik-Trägerelement (5.1) in einem Führungsschlitten (Optik-Justierung) (5), der ebenfalls im Gehäuse (1) befestigt ist, geführt. Dabei sind Optik-Trägerelement (5.1) und Führungsschlitten (5) senkrecht zur optischen Achse des Laserstrahls (6) ausgerichtet. Das Optik-Trägerelement (5.1) kann in dieser senkrecht zur optischen Achse des Laserstrahls (6) ausgerichteten Ebene zweidimensional verschoben und so in Bezug zur optischen Achse, insbesondere mit seinen am pyramidenförmigen Element (8) ausgebildeten reflektierenden Flächen (8.1) und daher zwangsweise auch mit den reflektierenden Oberflächen (8.2) justiert werden. Dazu können zwei in einem rechten Winkel zueinander ausgerichtete mit einem Gewinde versehene Justierlelemente (5.2) eingesetzt werden, mit denen die Optik-Justierung (5) jeweils in eine Achsrichtung, bevorzugt in die X- oder Y-Achsrichtung zur Justierung verschoben werden und gegeneinander arretiert werden kann.

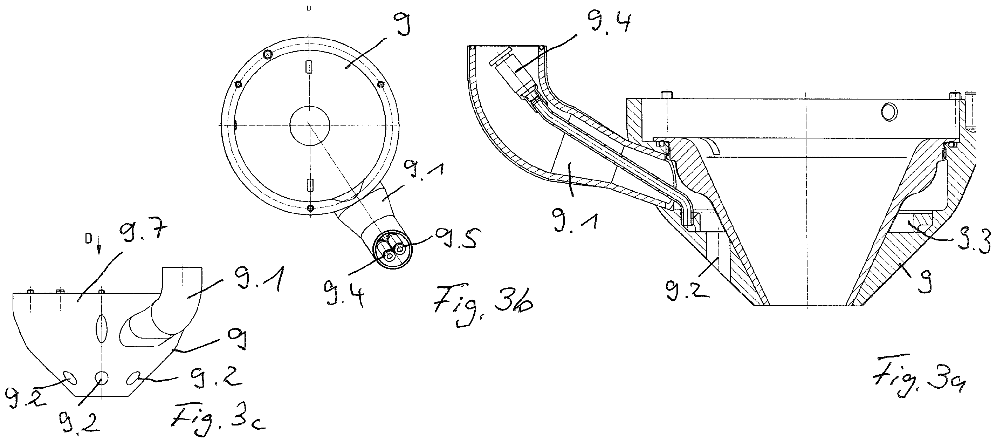

In den Figuren 3a bis 3c ist eine Rauchgasabsaugung (9) gezeigt. Dabei ist ein düsenförmiger Kegel (9.7) durch eine Schraubverbindung am Gehäuse (1) befestigbar. In dem Kegel (9.7) ist eine sich konisch in Richtung eines Werkstücks verjüngende Öffnung (9.6) ausgebildet, durch die die Austrittsdüse (2.1) mit dem drahtförmigen Werkstoff (3) sowie die drei Teilstrahlen (6.1 - 6.3) hindurchtreten können, ohne dass sie an der Wand der Rauchgasabsaugung (9) anstoßen und weiterhin mit Schutzgas beaufschlagt werden können.

Desweiteren sind in der Rauchgasabsaugung (9) Durchbrechungen (9.2) bei diesem Beispiel in Form von Bohrungen ausgebildet, in die bei der Bearbeitung gebildetes Rauchgas angesaugt und über den Absaugkanal (9.1) abgeführt werden kann. Die freien Querschnittsflächen der Durchbrechungen (9.2) und des Absaugkanals (9.1) sind so dimensioniert, wie im allgemeinen Teil der Beschreibung erläutert. Die Durchbrechungen (9.2) weisen gleiche freie Querschnittsfächen auf, durch die bei der Bearbeitung gebildetes Rauchgas angesaugt werden kann. Sie sind in gleichen Winkelabständen über den Umfang der Rauchgasabsaugung (9) verteilt angeordnet.

In der Rauchgasabsaugung (9) ist auch ein Kühlkanal (9.3) ausgebildet, der an eine Kühlmittelzufuhr (9.4) und an eine Kühlmittelabfuhr (9.5) angeschlossen ist. Die Kühlmittelzufuhr (9.4) und die Kühlmittelabfuhr (9.5) sind bei diesem Beispiel durch den Absaugkanal (9.1) hindurch geführt, so dass sie nicht stören und nicht von außen beschädigt werden können. Auch hierbei sollten die im allgemeinen Teil der Beschreibung genannten Dimensionierungsangaben, was die freien Querschnittsflächen betrifft, eingehalten werden. Die Rauchgasabsaugung (9 )ist ebenfalls aus Kupfer oder einer Kupferlegierung hergestellt und kann auch additiv hergestellt werden.

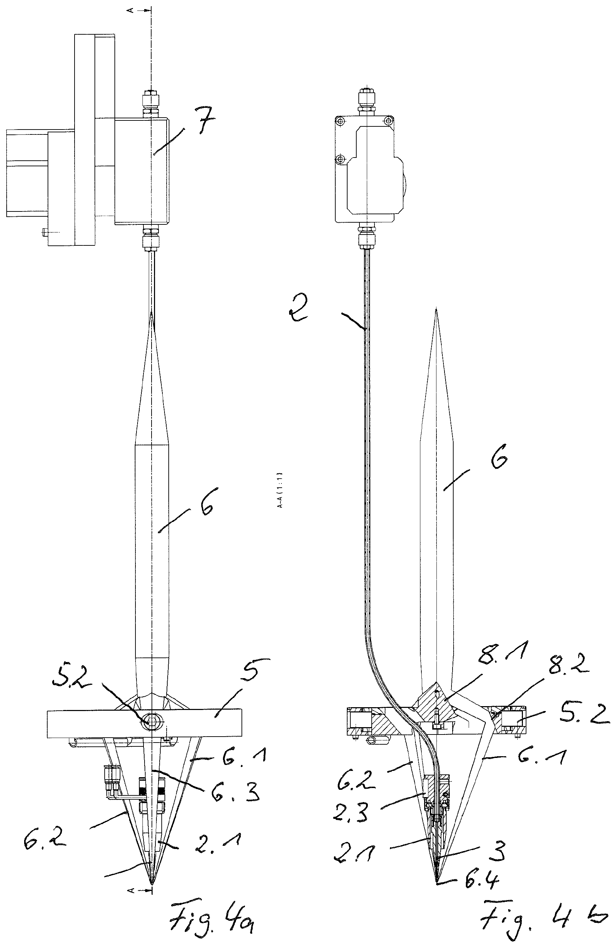

In Figuren 4a und 4b ist die vorteilhafte Führung des Laserstrahls (6) mit seinen Teilstrahlen (6.1 - 6.3) sowie die Zuführung des drahtförmigen Werkstoffs (3) mit der internen Drahtzuführung (2) verdeutlicht.

Dabei trifft der fokussierte Laserstrahl (6) auf die drei reflektierenden Flächen (8.1) des pyramidenförmigen Elements (8) und die dabei erhaltenen drei Teilstrahlen (6.1 -6.3) werden jeweils auf eine am Optik-Trägerelement (5.1) ausgebildete reflektierende Oberfläche (8.2) reflektiert. Mittels der reflektierenden Oberflächen (8.2) werden die drei Teilstrahlen (6.1 - 6.3) in schräg geneigtem Winkel aufeinander zu ausgerichtet, so dass sie sich in einer gemeinsamen Ebene schneiden (6.4). Diese Ebene (6.4) ist in Richtung eines zu bearbeitenden Werkstücks vor der Austrittsöffnung der Austrittsdüse (2.1) aus der der drahtförmige Werkstoff (3) sowie Schutzgas zur Abschirmung des Schmelzbades (2.4) austritt angeordnet, so dass der drahtförmige Werkstoff (3) von drei Seiten gleichmäßig mit den drei Teilstrahlen (6.1 - 6.3) bestrahlt und erwärmt wird, so dass eine gleichmäßige allseitige Erwärmung des drahtförmigen Werkstoffs (3) erreicht werden kann, die zu seinem vollständigen Schmelzen im bestrahlten Bereich führt.

Der drahtförmige Werkstoff (3) wird dabei im Zentrum der drei sich schneidenden Teilstrahlen (6.1 - 6.3) zugeführt.

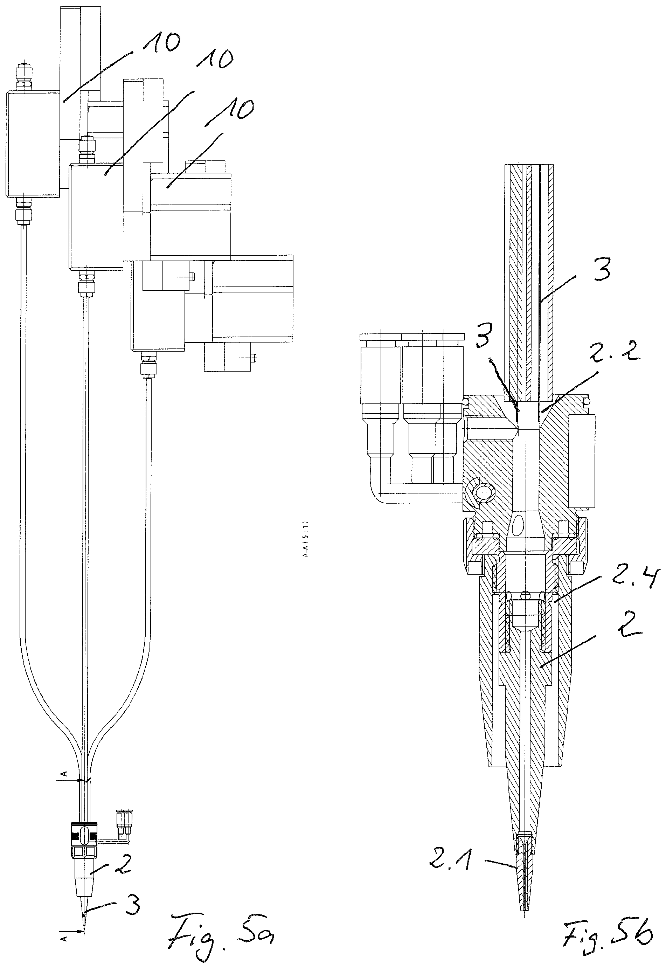

Mit den Figuren 5a und 5b soll die Möglichkeit einer Zuführung unterschiedlicher drahtförmiger Werkstoffe (3) oder die Möglichkeit des Einsatzes mehrerer externer Drahtzuführungen (10, 11, 12, 13) für eine nahezu unterbrechungsfreie Bearbeitungsmöglichkeit, wenn mit mehreren externen Drahtzuführungen (10, 11, 12, 13) der gleiche drahtförmige Werkstoff (3) zugeführt werden kann, angesprochen.

Die externen Drahtzuführungen (10, 11, 12, 13) sind mit jeweils einem eigenen Antrieb für den Vorschub des jeweiligen drahtförmigen Werkstoffs (3) ausgebildet. Sie können nacheinander aktiviert werden, um einen Wechsel an zugeführtem drahtförmigem Werkstoff (3) zu erreichen oder bei Erreichen des Endes eines drahtförmigen Werkstoffs (3) einer externen Drahtzuführung (10, 11, 12, 13) auf eine andere externe Drahtzuführung (10, 11, 12, 13) umschalten zu können.

Erfolgt ein Wechsel von einer externen Drahtzuführung (10, 11, 12, 13) zu einer anderen wird der von der nachfolgend aktivierten externen Drahtzuführung (10, 11, 12, 13) geförderte drahtförmige Werkstoff (3) in den trichterförmigen Bereich (2.2), der an der Stirnseite der internen Drahtzuführung (2) angeordnet ist, die der Austrittsdüse (2.1) gegenüberliegt, ausgebildet ist. Der neu zugeführte drahtförmige Werkstoff (3) kann sich dann mit Hilfe des trichterförmigen Bereichs (2.2) in die Bohrung, die bis zur Austrittsdüse (2.1) für den drahtförmigen Werkstoff (3) reichend ausgebildet ist, einfädeln, ohne dass eine weitere Maßnahme oder Mechanik erforderlich ist.

## Patentansprüche

1. Laserbearbeitungskopf, der zum Laser-Draht-Auftragsschweißen ausgebildet ist, bei dem
durch ein Gehäuse (1) ein Laserstrahl (6) auf ein pyramidenförmiges Element (8) und dabei auf mindestens drei mit in gleichen Winkelabständen zueinander ausgerichtete reflektierende Flächen (8.1) des pyramidenförmigen Elements (8) gerichtet ist und die jeweils von den reflektierenden Flächen (8.1) reflektierten Teilstrahlen (6.1-6.3) auf radial außen an einem Optik-Trägerelement (5.1) angeordnete reflektierende Oberflächen (8.2) auftreffen, wobei die reflektierenden Oberflächen (8.2) so ausgerichtet sind, dass die an ihnen reflektierten Teilstrahlen (6.1-6-3) so ausgerichtet sind, dass sie sich in einer gemeinsamen Ebene schneiden und
im Gehäuse (1) eine interne Drahtzuführung (2), mit einer in Richtung eines zu bearbeitenden Werkstücks angeordneten Austrittsdüse (2.1) für einen drahtförmigen Werkstoff (3), der mit der Energie der auf den drahtförmigen Werkstoff (3) auftreffenden Teilstrahlen (6.1-6.3) aufschmelzbar ist, angeordnet ist, wobei
die Austrittsdüse (2.1) in Vorschubbewegung des drahtförmigen Werkstoffs (3) vor der Ebene in der sich die reflektierten Teilstrahlen (6.1-6.3) schneiden angeordnet ist;
**dadurch gekennzeichnet, dass**
das pyramidenförmige Element (8) und die reflektierenden Oberflächen (8.2) an einem einzigen Optik-Trägerelement (5.1) ausgebildet sind und
das Optik-Trägerelement (5.1) in einer Optik-Justierung (5) so angeordnet und fixierbar ist, dass es in zwei senkrecht zur optischen Achse des Laserstrahls (6) oder senkrecht zur mittleren Längsachse des drahtförmigen Werkstoffs (3) zueinander ausgerichteten Achsen im Anschluss an die Austrittsdüse (2.1) verschiebbar ist, wobei
das Optik-Trägerelement (5.1) ein Monolyth ist, der aus einem einzigen Werkstoff gebildet ist und kein am Optik-Trägerelement (5.1) vorhandenes Einzelteil infolge einer Montage am Optik-Trägerelement (5.1) befestigt ist und der gleichzeitig ein zentrales Verschiebeelement der zwei senkrecht zur optischen Achse des Laserstrahls (6) oder senkrecht zur mittleren Längsachse des drahtförmigen Werkstoffs (3) zu der Optik-Justierung (5) ist.

2. Laserbearbeitungskopf nach Anspruch 1, **dadurch gekennzeichnet, dass** am oder im Optik-Trägerelement (5.1) mindestens ein Kühlkanal (8.4) und Kühlnuten (8.5) ausgebildet sind, die an eine Zu- und Abführung (9.4, 9.5) für ein Kühlmedium anschließbar sind.

3. Laserbearbeitungskopf nach einem der vorhergehenden Ansprüche, **dadurch gekennzeichnet, dass** das Optik-Trägerelement (5.1) mittels zwei senkrecht zueinander mit einem Gewinde versehenen Justierelementen (5.2) in den zwei senkrecht zueinander ausgerichteten Achsen justierbar ist.

4. Laserbearbeitungskopf nach einem der vorhergehenden Ansprüche, **dadurch gekennzeichnet, dass** mehrere externe Drahtzuführungen (10, 11, 12, 13) für eine Zufuhr unterschiedlicher Drahtwerkstoffe (3) vorhanden sind und aus den externen Drahtzuführungen (10, 11, 12, 13) jeweils ein drahtförmiger Werkstoff (3) der internen Drahtzuführung (2) zuführbar ist, wobei an der der Austrittsdüse (2.1) gegenüberliegenden Stirnseite eine trichterförmige Eintrittsöffnung (2.2) für die Einführung eines drahtförmigen Werkstoffs (3) aus einer der externen Drahtzuführungen (10, 11, 12, 13) in die interne Drahtzuführung (2) ausgebildet ist.

5. Laserbearbeitungskopf nach einem der vorhergehenden Ansprüche, **dadurch gekennzeichnet, dass** am Gehäuse (1) sowie an einer Montageeinheit (14) an der einem Werkstück zugewandten Stirnseite eine Rauchgasabsaugung (9) vorhanden ist.

6. Laserbearbeitungskopf nach dem vorhergehenden Anspruch, **dadurch gekennzeichnet, dass** die Rauchgasabsaugung (9) mit mehreren über den äußeren Umfang angeordneten Durchbrechungen (9.2), die in einem gemeinsamen Absaugkanal (9.1) münden, gebildet ist.

7. Laserbearbeitungskopf nach einem der zwei vorhergehenden Ansprüche, **dadurch gekennzeichnet, dass** die Summe der freien Querschnittsflächen der Durchbrechungen (9.2), durch die Rauchgas aus dem Bearbeitungsbereich des jeweiligen Werkstücks abgesaugt wird, der freien Querschnittsfläche des gemeinsamen Absaugkanals (9.1) entspricht oder
die Summe der freien Querschnittsflächen der Durchbrechungen (9.2) maximal 10 % größer oder kleiner als die freie Querschnittsfläche des Absaugkanals (9.1) ist und somit Strömungseintritt und Strömungsaustritt gleiche, zumindest. nahezu gleiche Querschnitte haben.

8. Laserbearbeitungskopf nach einem der drei vorhergehenden Ansprüche, **dadurch gekennzeichnet, dass** die Durchbrechungen (9.2) die Rauchgase in einem Absaugkanal (9.1) und anschließend in einem kreisförmigen an der Montageeinheit (14) befestigbaren Rohrelement (14.1) zu einem Gerät zur Schweißrauchabsaugung geführt werden.

9. Laserbearbeitungskopf nach dem vorhergehenden Anspruch, **dadurch gekennzeichnet, dass** die am Gehäuse (1) und an der Montageeinheit (14) sowie XYZ-Drahtjustage (15) befestigbare düsenförmige Rauchgasabsaugung (9) mit mindestens einem Kühlkanal (9.3), der an eine Zu- und eine Abführung (9.4, 9.5) für ein Kühlmedium verbindbar ist, ausgebildet ist.

10. Laserbearbeitungskopf nach dem vorhergehenden Anspruch, **dadurch gekennzeichnet, dass** die Zu- und Abführung (9.4, 9.5) durch den Absaugkanal (9.1) hindurch das Rohrelement (14.1) der Montageeinheit (14) geführt sind und die dafür erforderliche Querschnittsfläche die Bedingungen des Anspruchs 8 berücksichtigt sind.

11. Laserbearbeitungskopf nach einem der vorhergehenden Ansprüche, **dadurch gekennzeichnet, dass** die interne Drahtzuführung (2) und insbesondere die Austrittsdüse (2.1) senkrecht zur Ebene, in der das Optik-Trägerelement (5.1) zweidimensional verschieb- und justierbar ist, für eine definierte Positionierung in Bezug zur Ebene in der sich die reflektierten Teilstrahlen (6.1-6.3) schneiden (6.4) verschieb- und arretierbar ist.

## Claims

1. A laser processing head designed for laser wire cladding, in which
a laser beam (6) is directed through a housing (1) onto a pyramid-shaped element (8) and onto at least three reflective surfaces (8.1) of the pyramid-shaped element (8) which are aligned at equal angular distances from one another, and the partial beams (6.1-6.3) each reflected from the reflective surfaces (8.1) impinge on reflecting surfaces (8.2) arranged radially on the outside of an optics carrier element (5.1), the reflecting surfaces (8.2) being aligned such that the partial beams (6.1-6-3) reflected on them are aligned such that they intersect in a common plane, and
an internal wire feeder (2) is arranged in the housing (1), with an outlet nozzle (2.1), arranged in the direction of a workpiece to be machined, for a wire-shaped material (3) which can be melted with the energy of the partial beams (6.1-6.3) impinging on the wire-shaped material (3), wherein
the outlet nozzle (2.1) is arranged in front of the plane in which the reflected partial beams (6.1-6.3) intersect as the wire-shaped material (3) advances;
**characterised in that**
the pyramid-shaped element (8) and the reflective surfaces (8.2) are formed on a single optics carrier element (5.1), and
the optics carrier element (5.1) is arranged and can be fixed in an optics adjustment (5) in such a way that it can be displaced in two axes aligned perpendicular to the optical axis of the laser beam (6) or perpendicular to the central longitudinal axis of the wire-shaped material (3) in connection with the outlet nozzle (2.1), wherein
the optics carrier element (5.1) is a monolith which is formed from a single material and no individual part present on the optics carrier element (5.1) is attached to the optics carrier element (5.1) as a result of assembly and which is at the same time a central displacement element of the two perpendicular to the optical axis of the laser beam (6) or perpendicular to the central longitudinal axis of the wire-shaped material (3) to the optics adjustment (5).

2. The laser processing head according to claim 1, **characterised in that** at least one cooling channel (8.4) and cooling grooves (8.5) are formed on or in the optics carrier element (5.1), which can be connected to an inlet and outlet (9.4, 9.5) for a cooling medium.

3. The laser processing head according to any one of the preceding claims, **characterised in that** the optics carrier element (5.1) can be adjusted in the two axes aligned perpendicular to one another by means of two adjustment elements (5.2) provided with a thread perpendicular to one another.

4. The laser processing head according to any one of the preceding claims, **characterised in that** a plurality of external wire feeders (10, 11, 12, 13) are provided for a feed of different wire materials (3) and a wire-shaped material (3) can be fed from the external wire feeders (10, 11, 12, 13) to the internal wire feeder (2), wherein a funnel-shaped inlet opening (2.2) for the introduction of a wire-shaped material (3) from one of the external wire feeders (10, 11, 12, 13) into the internal wire feeder (2) is formed at the end face opposite the outlet nozzle (2.1).

5. The laser processing head according to any one of the preceding claims, **characterised in that** a fume extraction system (9) is provided on the housing (1) and on a mounting unit (14) on the end face facing a workpiece.

6. The laser processing head according to the preceding claim, **characterised in that** the fume extraction system (9) is formed with a plurality of through-holes (9.2) arranged around the outer circumference, which open into a common extraction channel (9.1).

7. The laser processing head according to one of the two preceding claims, **characterised in that** the sum of the free cross-sectional areas of the through-holes (9.2), through which fumes are extracted from the machining area of the respective workpiece, corresponds to the free cross-sectional area of the common extraction channel (9.1), or
the sum of the free cross-sectional areas of the through-holes (9.2) is at most 10 % larger or smaller than the free cross-sectional area of the extraction channel (9.1) and thus the flow inlet and flow outlet have the same, or at least almost the same, cross-sections.

8. The laser processing head according to any one of the three preceding claims, **characterised in that** the through-holes (9.2) guide the fumes in an extraction channel (9.1) and then in a circular tubular element (14.1), which can be attached to the mounting unit (14), to a device for extracting welding fumes.

9. The laser processing head according to the preceding claim, **characterised in that** the nozzle-shaped fume extraction system (9), which can be attached to the housing (1) and to the mounting unit (14) and XYZ wire adjustment (15), is designed with at least one cooling channel (9.3), which can be connected to an inlet and an outlet (9.4, 9.5) for a cooling medium.

10. The laser processing head according to the preceding claim, **characterised in that** the inlet and outlet (9.4, 9.5) are guided through the extraction channel (9.1) through the tubular element (14.1) of the mounting unit (14) and the cross-sectional area required for this takes into account the conditions of claim 8.

11. The laser processing head according to one of the preceding claims, **characterised in that** the internal wire feeder (2) and in particular the outlet nozzle (2.1) can be displaced and adjusted perpendicularly to the plane in which the optics carrier element (5.1) can be displaced and adjusted in two dimensions for a defined positioning in relation to the plane in which the reflected partial beams (6.1-6.3) intersect (6.4).

## Revendications

1. Tête d'usinage laser, qui est réalisée pour le rechargement laser avec fil, selon lequel
un faisceau laser (6) est dirigé à travers un boîtier (1) sur un élément en forme de pyramide (8) et ainsi sur au moins trois surfaces réfléchissantes (8.1) de l'élément en forme de pyramide (8) orientées à des distances angulaires égales les unes par rapport aux autres et les faisceaux partiels (6.1-6.3) respectivement réfléchis par les surfaces réfléchissantes (8.1) frappent des surfaces réfléchissantes (8.2) disposées radialement à l'extérieur sur un élément de support d'optique (5.1), dans laquelle les surfaces réfléchissantes (8.2) sont orientées de telle sorte que les faisceaux partiels (6.1-6-3) réfléchis sur elles sont orientés de telle sorte qu'ils se croisent dans un plan commun et
une amenée de fil interne (2), avec une buse de sortie (2.1) disposée en direction d'une pièce à usiner pour un matériau en forme de fil (3), qui peut être fondu avec l'énergie des faisceaux partiels (6.1-6.3) frappant le matériau en forme de fil (3), est disposée dans le boîtier (1), dans laquelle
la buse de sortie (2.1) est disposée dans le mouvement d'avance du matériau en forme de fil (3) devant le plan dans lequel les faisceaux partiels (6.1-6.3) réfléchis se croisent ;
**caractérisée en ce que**
l'élément en forme de pyramide (8) et les surfaces réfléchissantes (8.2) sont réalisés sur un seul élément de support d'optique (5.1) et
l'élément de support d'optique (5.1) est disposé et peut être fixé dans un ajustement d'optique (5) de telle sorte qu'il peut être déplacé dans deux axes orientés l'un par rapport à l'autre perpendiculairement à l'axe optique du faisceau laser (6) ou perpendiculairement à l'axe longitudinal médian du matériau en forme de fil (3) à la suite de la buse de sortie (2.1), dans laquelle
l'élément de support d'optique (5.1) est un monolithe, qui est formé d'un seul matériau et aucune pièce individuelle présente sur l'élément de support d'optique (5.1) n'est fixée à l'élément de support d'optique (5.1) suite à un montage et qui est en même temps un élément de déplacement central des deux perpendiculairement à l'axe optique du faisceau laser (6) ou perpendiculairement à l'axe longitudinal médian du matériau en forme de fil (3) pour l'ajustement d'optique (5).

2. Tête d'usinage laser selon la revendication 1, **caractérisée en ce qu'**au moins un canal de refroidissement (8.4) et des rainures de refroidissement (8.5) sont réalisés sur ou dans l'élément de support d'optique (5.1), qui peuvent être raccordés à une amenée et à une évacuation (9.4, 9.5) pour un fluide de refroidissement.

3. Tête d'usinage laser selon l'une quelconque des revendications précédentes, **caractérisée en ce que** l'élément de support d'optique (5.1) peut être ajusté dans les deux axes orientés perpendiculairement l'un à l'autre au moyen de deux éléments d'ajustement (5.2) munis d'un filetage perpendiculaires l'un à l'autre.

4. Tête d'usinage laser selon l'une quelconque des revendications précédentes, **caractérisée en ce que** plusieurs amenées de fil externes (10, 11, 12, 13) pour une amenée de différents matériaux de fil (3) sont présentes et que respectivement un matériau en forme de fil (3) peut être amené à partir des amenées de fil externes (10, 11, 12, 13) à l'amenée de fil interne (2), dans laquelle une ouverture d'entrée (2.2) en forme d'entonnoir pour l'introduction d'un matériau en forme de fil (3) provenant de l'une des amenées de fil externes (10, 11, 12, 13) dans l'amenée de fil interne (2) est réalisée sur la face frontale opposée à la buse de sortie (2.1).

5. Tête d'usinage laser selon l'une quelconque des revendications précédentes, **caractérisée en ce qu'**un dispositif d'aspiration de gaz de fumée (9) est présent sur le boîtier (1) ainsi que sur une unité de montage (14) sur la face frontale tournée vers une pièce.

6. Tête d'usinage laser selon la revendication précédente, **caractérisée en ce que** le dispositif d'aspiration de gaz de fumée (9) est formé avec plusieurs percées (9.2) disposées sur la périphérie extérieure, qui débouchent dans un canal d'aspiration (9.1) commun.

7. Tête d'usinage laser selon l'une des deux revendications précédentes, **caractérisée en ce que** la somme des surfaces de section libre des percées (9.2), par lesquelles les gaz de fumée sont aspirés hors de la zone d'usinage de la pièce respective, correspond à la surface de section libre du canal d'aspiration (9.1) commun ou
la somme des surfaces de section libre des percées (9.2) est au maximum 10 % plus grande ou plus petite que la surface de section libre du canal d'aspiration (9.1) et ainsi l'entrée d'écoulement et la sortie d'écoulement présentent des sections transversales identiques, du moins presque identiques.

8. Tête d'usinage laser selon l'une quelconque des trois revendications précédentes, **caractérisée en ce que** les percées (9.2) guident les gaz de fumée dans un canal d'aspiration (9.1) puis dans un élément tubulaire (14.1) circulaire pouvant être fixé à l'unité de montage (14) vers un appareil d'aspiration des fumées de soudage.

9. Tête d'usinage laser selon la revendication précédente, **caractérisée en ce que** le dispositif d'aspiration de gaz de fumée (9) en forme de buse pouvant être fixé au boîtier (1) et à l'unité de montage (14) ainsi qu'à l'ajustage de fil XYZ (15) est réalisé avec au moins un canal de refroidissement (9.3) qui peut être relié à une amenée et à une évacuation (9.4, 9.5) pour un fluide de refroidissement.

10. Tête d'usinage laser selon la revendication précédente, **caractérisée en ce que** l'amenée et l'évacuation (9.4, 9.5) sont guidées à travers le canal d'aspiration (9.1) par l'élément tubulaire (14.1) de l'unité de montage (14) et la surface de section transversale nécessaire à cet effet tient compte des conditions de la revendication 8.

11. Tête d'usinage laser selon l'une quelconque des revendications précédentes, **caractérisée en ce que** l'amenée de fil interne (2) et en particulier la buse de sortie (2.1) peuvent être déplacées et bloquées perpendiculairement au plan dans lequel l'élément de support d'optique (5.1) peut être déplacé et ajusté dans deux dimensions, pour un positionnement défini par rapport au plan dans lequel les faisceaux partiels (6.1-6.3) réfléchis se croisent (6.4).
